# EUROPEAN PATENT SPECIFICATION

(11) **EP 3 577 377 B1**
(45) Date of publication and mention of the grant of the patent: **31.05.2023**
(21) Application number: 18710134.0
(22) Date of filing: 06.02.2018
(51) Int. Cl.: F16K 41/10, F16K 27/00, F16K 27/02, F16K 31/06

(54) **DRIVING ELECTROVALVE**
ANSTEUERUNGSELEKTROVENTIL
ÉLECTROVANNE DE COMMANDE

(30) Priority: 06.02.2017 IT 201700012486
(43) Date of publication of application: 11.12.2019
(73) Proprietor: SAIPEM S.p.A., 20138 Milano (IT)
(72) Inventor: MAGRI, Diego, 20138 Milano (IT)
(74) Representative: Crippa, Paolo Ernesto
(86) International application number: PCT/IB2018/050725
(87) International publication number: WO 2018/142368

(56) References cited:
- DE-B- 1 223 647
- US-A- 2 826 215
- US-A- 3 101 741
- US-A- 4 611 631
- US-A- 5 443 241
- US-A1- 2005 072 481
- US-A1- 2012 061 600
- US-B1- 6 488 050

## Description

### . Field of the invention

. The present invention relates to an electrovalve.

. In particular, the present invention relates to a driving electrovalve.

. An electrovalve according to the present invention is particularly suited, but not exclusively intended, for submarine environment.

. The present invention also relates to an assembly and to a system comprising said electrovalve.

### . Prior art

. Known types of driving electrovalves are generally used as actuators for controlled valves in various industrial processes. Driving electrovalves have typically faster response time than controlled valves, and generally comprise a fluid inlet chamber, a fluid outlet chamber, a movable plunger held in closing position by means of a spring and a moving assembly of the electro-magnetic actuated plunger, in which the plunger, when it is moved by the electromagnetic bias of the moving assembly, is adapted to put the fluid inlet chamber into communication with the fluid outlet chamber.

. For example, in the technical field of fuel injectors for internal combustion engines, driving valves are commonly used to inject fuel into the engine, and adapted to work with a fluid, i.e. the fuel, at very high pressures, e.g. in the order of 1300-1800 bar. A solution of this type is disclosed, for example, in document FR-2365070**,** which shows a driving electrovalve for fuel injection, characterized in that it comprises a movable hollow cylindrical plunger which is in hydrostatic equilibrium with the fuel accommodated in the fluid inlet chamber of the electrovalve when the electrovalve is closed. This device allows the moving assembly of the electro-magnetically actuated plunger to open the electrovalve, applying a force which is slightly greater than the elastic resistance applied by the spring associated with the plunger and which tends to keep it in the closing position. Other known solutions are disclosed by documents US2012/061600, DE1223647 and US4611631. US2012/061600 shows a pressure-balanced multiple-way valve wherein only one of the thrust areas comprises a membrane as a sealing element in the open position. DE1223647 shows an electrovalve which is pressure balanced only in the open position. This valve includes membranes as sealing elements for the plunger. US4611631 shows a pressure-balanced three-way electrovalve with sealing elements which are different to membranes and a valve casing which is adopted for this kind of resilient seal members.

. However, the solution described above, although advantageous from some points of view, is not without drawbacks.

. Indeed, when the electrovalve is open, the plunger is not in hydrostatic equilibrium conditions. This means that the spring associated with the plunger must apply a return force which must overcome the fuel pressure, slowing the response of the electrovalve in the step of closing and at the same time imposing relatively large dimensions of the spring.

. Furthermore, a driving electrovalve is adapted to work with a working fluid, i.e. fuel, which was repeatedly filtered and is free from impurities. This allows electrovalves of this type to operate with small through gaps without causing obstructions of the orifices due to the progressive accumulation of solid particles, and therefore makes it possible to make plungers having a short stroke, which make the elastic return action of the spring less demanding. Therefore, also for these reasons, driving electrovalves for fuel injection of this type are designed to allow the working fluid to flow into chambers provided in contact with such return spring and in contact with parts of the electromagnetic actuator of the moving assembly of the movable plunger.

**.** The need is thus felt to provide a driving electrovalve capable of providing fast response time, also operating with working fluids which contain impurities and suspended solid particles, without because of this limiting the fluid flow rate of the working fluid.

**.** As known, electrovalves are advantageously used in the technical field of hydrocarbon extraction from submarine oilfields. For example, in order to respond to the need of increasing the submarine oilfield production, one solution consists in pumping seawater into the oilfield itself. The submarine environment requires the driving electrovalves to operate with working fluids, such as seawater for example, which may include a suspension of solid particles, such as undissolved salts and sand for example, and which may quickly wear the parts of the movable plunger adapted to abut against the inner walls of the valve body and obstruct the orifices and gaps of the fluid flow path of the electrovalve, whereby reducing the service life of the electrovalve. At the same time, the infiltrations of the working fluid inside the housing of the electromagnetic actuator of the moving assembly of the plunger, said infiltrations, which may be either accidental or the result of precise design choices, imply a reduced efficacy of the magnetic field produced by the moving assembly of the plunger and may lead to the premature failure of the electrovalve. Maintenance operations in the submarine environment imply high costs and maneuvering objective difficulties, and the need to limit them to a minimum is therefore felt.

**.** The need is therefore strongly felt to provide a driving electrovalve solution adapted to operate in the underwater environment.

. The need is felt to provide a reliable driving electrovalve solution adapted to operate in the underwater environment, without because of this requiring continuous valve maintenance.

. Furthermore, the need is strongly felt to provide a driving electrovalve solution capable of providing fast response time and at the same time of envisaging, when the valve plunger is open, a sufficiently large passage gap between the fluid inlet opening and the fluid outlet opening of the electrovalve to allow the solid particles suspended in the working fluid to pass through the valve body without remaining trapped in the valve.

**.** The need is therefore felt to provide a driving electrovalve solution capable of providing rapid response times, without because of this increasing the dimensions of the moving device of the plunger with respect to known solutions.

### . Solution

. It is an object of the present invention to solve the drawbacks of the prior art and to provide a solution to the needs mentioned hereto with reference to the prior art.

. These and other objects are achieved by an electrovalve according to claim **1,** and by an assembly according to claim 14.

. Some advantageous embodiments are the object of the dependent claims.

### . Figures

. Further features and advantages of the electrovalve and of the assembly will be apparent from the following description of its preferred embodiments, given by way of non-limiting examples, with reference to the accompanying figures, in which:

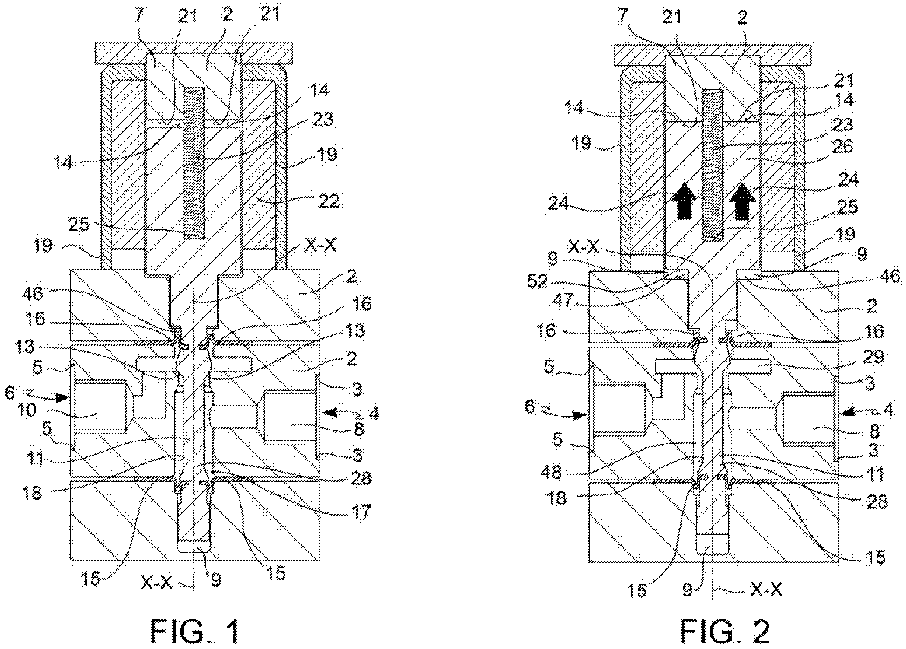

- figure 1 is a diagrammatic, section view which shows an electrovalve according to an embodiment, when the plunger element is in closing position;
- figure 2 is a diagrammatic, section view of the electrovalve in figure 1, when the plunger element is in opening position;

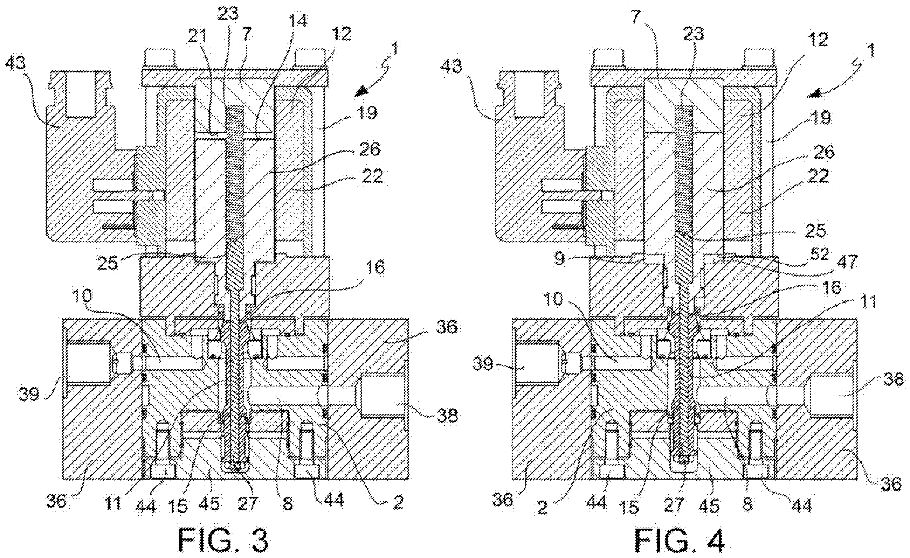

- figure 3 is a diagrammatic, section view which shows an electrovalve according to an embodiment, when the plunger element is in closing position;
- figure 4 is a diagrammatic, section view of the electrovalve in figure 3, when the plunger element is in opening position;
- figure 5 is an enlarged diagrammatic section view which shows details of the electrovalve in figure 1, when the plunger element is in closing position;
- figure 6 is an enlarged diagrammatic section view which shows details of the electrovalve in figure 2, when the plunger element is in opening position;

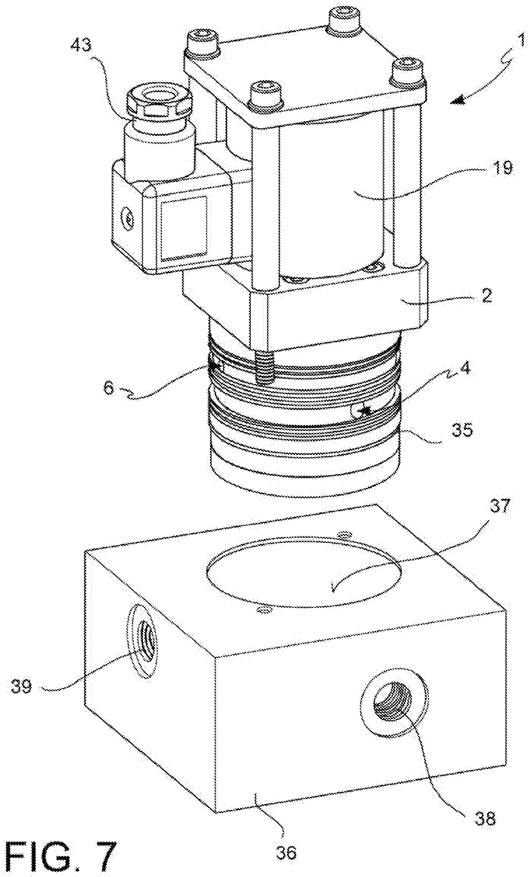

- figure 7 is an axonometric view with parts separated of an electrovalve according to an embodiment comprising a base;

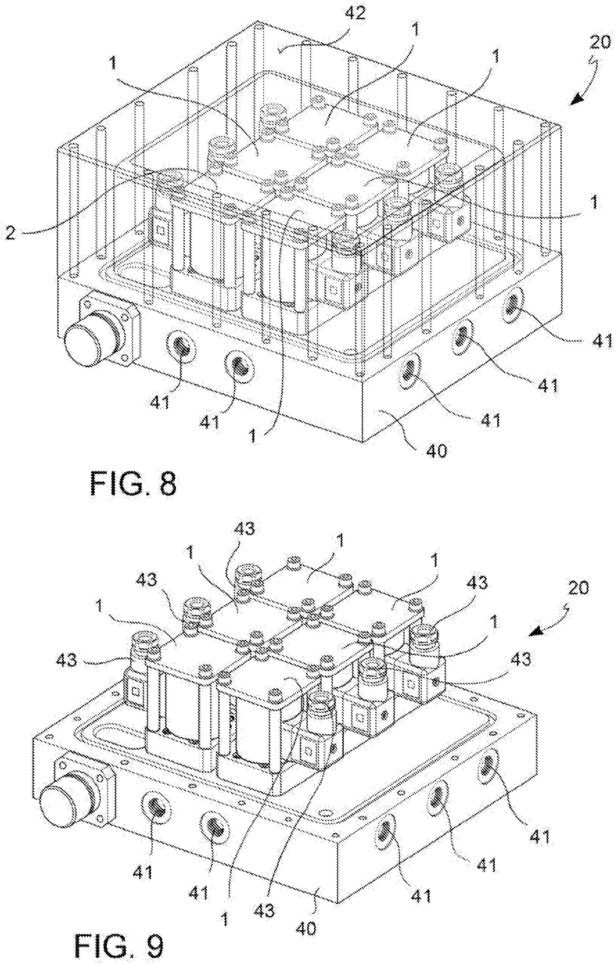

- figures 8 and 9 show an assembly comprising a plurality of electrovalves, according to some embodiments;

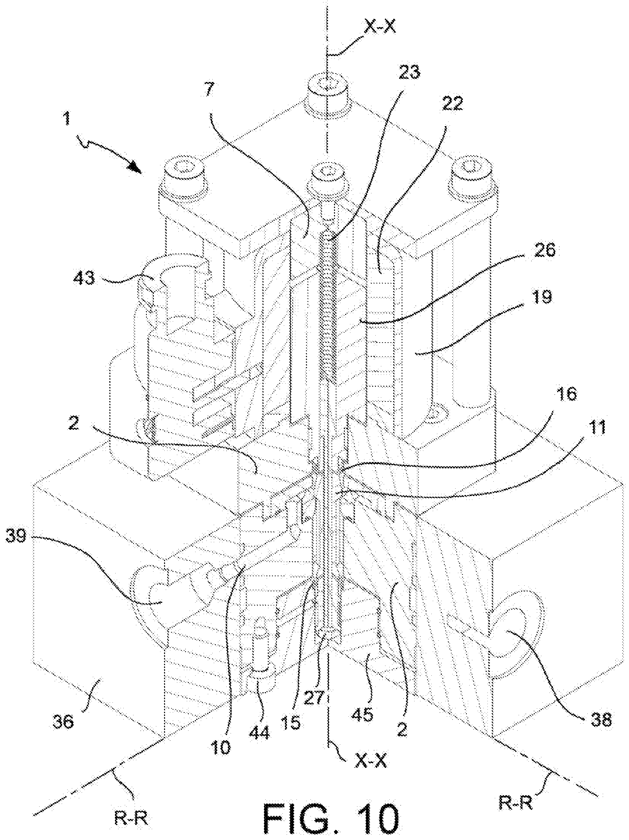

- figure 10 is an axonometric, diagrammatic section view of an electrovalve according to an embodiment.

### . Description of some preferred embodiments

. An electrovalve 1 is provided according to a general embodiment.

. Preferably, said electrovalve 1 is a driving electrovalve.

. Preferably, said electrovalve 1 is particularly suited, but not exclusively intended, to work with process fluids having pressure preferably comprised between 4 bar and 40 bar and fluid flow rate up to 10 liters per minute.

. Said electrovalve 1 is particularly adapted, but not exclusive intended, for applications in submarine environment. Preferably, said electrovalve 1 is adapted to be supplied with a process fluid which comprises seawater comprising impurities, such as sand, organic and inorganic debris, for example, as well as undissolved or not completely dissolved salts.

. Said electrovalve 1 comprises a valve body 2, which delimits at least one inlet opening 4. Said valve body 2 delimits at least one outlet opening 6. Preferably, said electrovalve 1 comprises a valve body 2, which comprises at least one inlet edge 3, which delimits at least one inlet opening 4, and at least one outlet edge 5, which delimits at least one outlet opening 6. A process fluid associable with the electrovalve valve 1 enters into an inlet chamber 8 from inlet opening 4.

. Said valve body 2 comprises inlet chamber walls which at least partially delimit at least said inlet chamber 8 in fluid communication with said at least one inlet opening 4, and outlet chamber walls, which at least partially delimit at least said outlet chamber 10, in fluid communication with said at least outlet opening 6.

. Said electrovalve 1 further comprises a plunger element 11, which is movable between at least one closing position and at least one opening position.

**.** When the plunger element 11 is in said at least one closing position, said inlet chamber 8 comprises a first plunger housing chamber portion 30 and said outlet chamber 10 comprises a second plunger housing chamber portion 17, said first plunger housing chamber portion 30 and said second plunger housing chamber portion 17 defining a plunger housing 48. Said plunger element 11 is accommodated in said plunger housing 48 and is movable with respect to said valve body 2 between said at least one opening position, in which it puts said inlet chamber 8 into fluid communication with said outlet chamber 10, and said at least one closing position, in which by cooperating with said plunger housing 48, it fluidically isolates said outlet chamber 10 from said inlet chamber 8. When the plunger element 11 is in said at least one opening position, said plunger housing chamber portion 30 and said second plunger housing chamber portion 17 are in mutual fluid communication, forming said plunger housing 48.

**.** According to an embodiment, said inlet chamber 8 comprises a first inlet chamber portion 49 and a first plunger housing portion 30, in which said first inlet chamber portion 49 leads into said first plunger housing portion 30 in an engaging portion 51 of the plunger housing 48. Preferably, the cross-section of said first plunger housing chamber portion 30 is larger than said first inlet chamber portion 49. According to an embodiment, said outlet chamber 10 comprises a first outlet chamber portion 50 and a second plunger housing chamber portion 17, into which said second plunger housing chamber portion 17 leads in said first outlet chamber portion 50.

. Said electrovalve 1 comprises a moving assembly 12 adapted to move said plunger element 11 between said at least one opening position and said at least one closing position.

. Said plunger element 11 comprises at least one sealing surface 13, which forms an abutment reference adapted to cooperate with a counter-sealing surface 33 provided in the walls of said plunger housing 48 which delimits at least one portion of the plunger housing 48, whereby forming a seal for a process fluid associable with the electrovalve 1, when said plunger element 11 is in said at least one closing position.

**.** According to a preferred embodiment, said sealing surface 13 is truncated-cone-shaped, whereby defining a truncated-cone-shaped portion 34 of the plunger element 11. According to an embodiment, said sealing surface 13, or an extension thereof, is substantially ogive-shaped.

. Said electrovalve 1 further comprises an inlet chamber sealing element 15 associated with said plunger element 11 and associated with said inlet chamber walls, wherein said inlet chamber sealing element 15 by permitting the movement of said plunger element 11, forms at least one wall of said inlet chamber 8. In this manner, said inlet chamber sealing element 15 forms at least one of the walls of the plunger housing chamber 48, and particularly of the first plunger housing chamber portion 30, and being made of deformable material, allows said plunger element 11, which is intimately associated with said inlet chamber sealing element 15, to move anyway between said at least one closing position and said at least one opening position, without because of this compromising the fluid isolation of the inlet chamber 8.

**.** Said electrovalve 1 further comprises an outlet chamber sealing element 16 associated with said plunger element 11 and associated with said outlet chamber walls, wherein said outlet chamber sealing element 16 by permitting the movement of said plunger element 11, forms at least one wall of said outlet chamber 10. In this manner, said outlet chamber sealing element 16 forms at least one of the walls of the plunger housing chamber 48, and particularly of the second plunger housing chamber portion 17, and being made of deformable material, allows said plunger element 11, which is intimately associated with said outlet chamber sealing element 16, to move anyway between said at least one closing position and said at least one opening position, without because of this compromising the fluid isolation of the outlet chamber 10.

. Said inlet chamber sealing element 15 defines at least one thrust area S1, or first thrust area S1, on which the process fluid acts.

. Said sealing surface 13 of the plunger element 11 by cooperating with the counter-sealing surface 33 of the plunger housing 48 defines at least one thrust area S2, or second thrust area S2, on which the process fluid acts.

. Said outlet chamber sealing element 16, defines at least one thrust area S3, or third thrust area S3, on which the process fluid acts.

. Said thrust areas S1, S2, S3 are substantially mutually equal, so that said plunger element 11 is in hydrostatic equilibrium both when it is in said at least one opening position and when it is in said at least one closing position.

. The expression "thrust areas S1, S2, S3" means the areas on which the pressure applied by the process fluid acts. As known, the force generated by a pressurized fluid directly depends on the area on which the pressure of the pressurized fluid acts. Therefore, providing said thrust areas S1, S2, S3 equal makes it possible to keep the plunger element 11 in hydrostatic equilibrium both when the plunger element 11 is in the closing position and when the plunger element 11 is in the opening position.

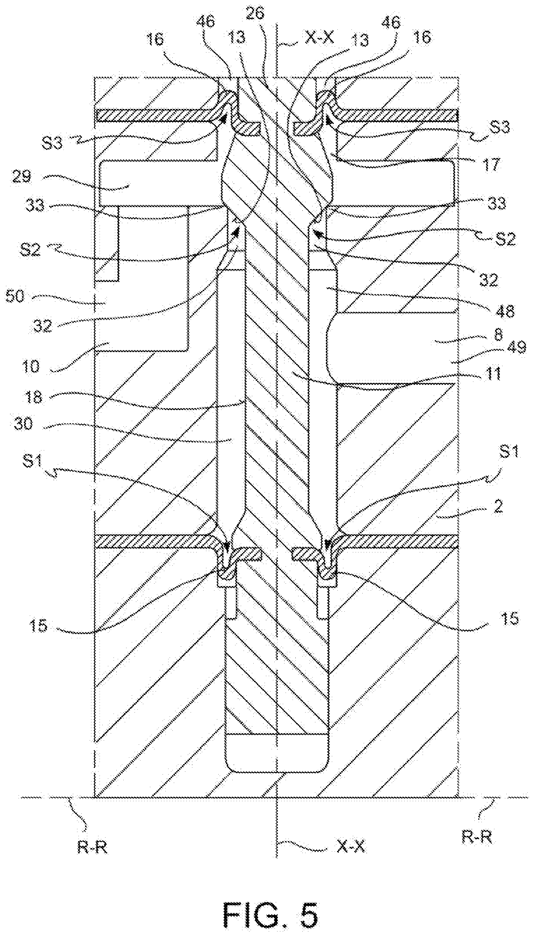

**.** When said plunger element 11 is in at least one closing position, the thrust areas S1, S2 on which the process fluid presses are located on said inlet chamber sealing element 15 and on said sealing face 13 of the plunger element 11, respectively. In other words, as shown for example in **figure 5****,** when the plunger element 11 is in the closing position, the process fluid presses on the first thrust area S1, which is located on said inlet chamber sealing element 15 and on the second thrust area S2, which is located on the sealing face 13 of the plunger element 11.

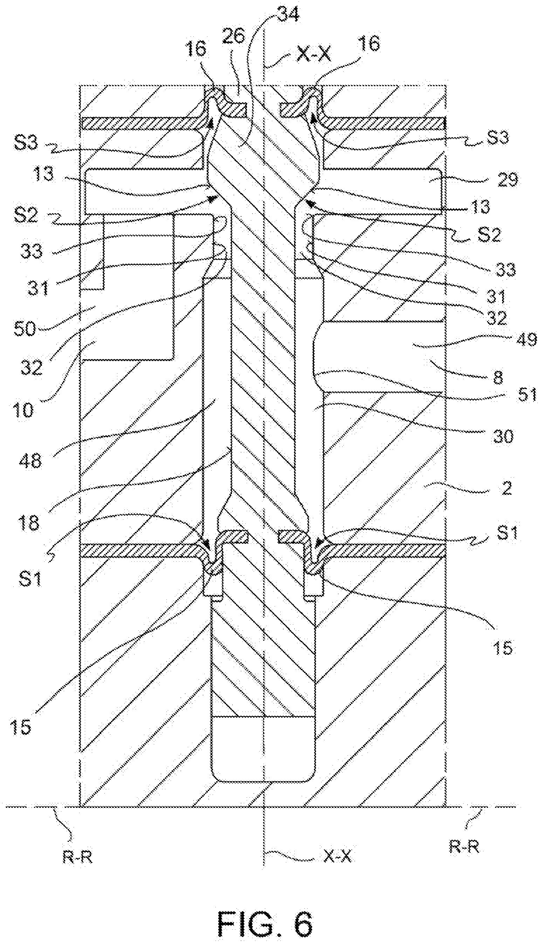

. When said plunger element 11 is in at said least one opening position, the thrust areas S1, S3 on which the process fluid presses are located on said inlet chamber sealing element 15 and on said outlet chamber sealing element 16, respectively. In other words, as shown for example in **figure 6****,** when the plunger element 11 is in the opening position, the process fluid presses on the first thrust area S1, which is located on said inlet chamber sealing element 15 and on the third thrust area S3 which is located on said outlet chamber sealing element 16.

. By providing said substantially and mutually equal thrust areas S1, S2, S3 which can be defined on said sealing surface 13 of the plunger element 11 and on said inlet chamber sealing element 15 associated with the plunger element 11 and on said outlet chamber sealing element 16 associated with the plunger element 11, it is possible to minimize the force needed to open and close the electrovalve 1 by moving the plunger element 11.

. By providing such electrovalve 1 having mutually equal thrust areas S1, S2, S2 and S3, which can be defined on said inlet chamber sealing element 15 associated with the plunger element 11 and on said sealing surface 13 of the plunger element 11 and on said outlet chamber sealing element 16 associated with the plunger element 11, respectively, a larger passage section can be achieved when the plunger element 11 is in the opening position, the force generated by the moving assembly 12 being equal with respect to known solutions. Providing a larger passage section, the force generated by the moving assembly 12 being the same, allows said electrovalve 1 to operate with process fluids containing impurities and solid particles, such as seawater for example, without because of this periodically becoming occluded.

. Such electrovalve 1 provides improved reliability compared to known solutions, needs less actuating energy, has a long service life and reduced need for periodic maintenance. Providing an electrovalve 1 with improved reliability allows an increased reliability of a system which comprises such electrovalve 1.

. According to a preferred embodiment, said moving assembly 12 comprises an electromagnetic actuator 22, e.g. a solenoid, a magnet comprising a magnet body 7 and a spring return 23, wherein said return spring 23 elastically biases to close said element plunger 11, and in which said electromagnetic actuator 22, e.g. a solenoid, magnetically biases to open said plunger element 11.

. Providing said mutually equal thrust areas S1, S2, S3 makes it possible to reduce the electric current needed to move the plunger element 11, as well as the dimension of the electromagnetic actuator 22, e.g. a solenoid, of the moving assembly 12, and consequently to reduce the dimension of the return spring 23 of the moving assembly 12. The force which must be developed by the moving assembly 12 comprising an electromagnetic actuator 22, e.g. a solenoid, to open the electrovalve 1 by moving the plunger element 11 must be greater than the sum of the elastic resistance of the return spring 23 and the resistance to deformation of the inlet chamber and outlet chamber sealing elements 15, 16.

. According to a preferred embodiment, said outlet sealing element chamber 16 fluidically isolates said moving assembly 12 from said outlet chamber 10. In this manner, said outlet chamber sealing element 16 separates said second plunger housing chamber portion 17 from said moving assembly housing 46, whereby preventing the process fluid associable with electrovalve 1 from coming into contact with the moving assembly 12. Providing said outlet chamber sealing element 16 prevents the process fluid from leaking into the moving assembly 12, whereby improving the reliability of electrovalve 1.

. Furthermore, by providing said inlet chamber sealing element 15 together with said outlet chamber sealing element 16, when said plunger element 11 is in the opening position, a gap 9, which is fluidically isolated from said outlet chamber 10, is formed between said plunger element 11 and said valve body 2, and a gap 9, which is fluidically isolated from said inlet chamber 8, is formed between said plunger element 11 and said valve body 2. Such gaps 9 can be filled with lubricating fluid, such as oil. According to an embodiment, said moving assembly 46 comprises at least one gap 9.

**.** According to an embodiment, said plunger element 11 has an elongated shape which extends along a median axis X-X. Preferably, said plunger element 11 has a radial symmetry shape which develops about the median axis X-X. Preferably, said plunger element 48 has a radial symmetry shape about the median axis X-X and said plunger element 11 has a radial symmetry shape which extends about the median axis X-X. Preferably, said plunger housing 48 is substantially ring-shaped and surrounds at least one portion of said plunger element 11. Preferably, said plunger element 11 faces an outer plunger surface 18 of said plunger housing 48.

. According to an embodiment, said thrust areas S1, S2, S3 are ring-shaped.

**.** According to a preferred embodiment, said plunger housing 48 has a radial symmetry shape which develops about the median axis X-X, defining a radial direction R-R which is orthogonal to the median axis X-X, wherein said first inlet chamber portion 49 of the inlet chamber 8 leads radially into said plunger housing 48 in an engaging position 51. According to a preferred embodiment, said plunger housing 48 has a radial symmetry shape which develops about the median axis X-X, defining a radial direction R-R which is orthogonal to the median axis X-X, wherein said first inlet chamber portion 49 of the inlet chamber 8 leads radially into said plunger housing portion 30 of said plunger housing 48 in an engaging position 51. In this manner, a large portion of the outer plunger surface 18 of the plunger element 11 can face the process flow let into the electrovalve 1 from said inlet opening 4.

. According to an embodiment, said plunger housing 48 leads radially into said first outlet chamber portion 50 of the outlet chamber 10.

. According to an embodiment, the extension of said engaging portion 51 of the plunger housing 48 along the direction defined by the median axis X-X is smaller than the extension of the first plunger housing portion 30.

. According to an embodiment, said second plunger housing portion 17 of the plunger housing 48 comprises an absorption portion 29, of larger section than said first plunger housing portion 30, to absorb possible water hammers and shock waves deriving from the movement of the plunger element 11 of the electrovalve 1 between said at least one opening position and said at least one closing position. Preferably, said absorption portion 29 is ring-shaped.

. Preferably, said truncated-cone-shaped portion 34 of said plunger element 11 faces towards said absorption portion 29 of the plunger housing. Preferably, said absorption portion 29 of the plunger housing 48 extends radially with respect to said truncated-cone-shaped portion 34 of the plunger element 11.

. Said inlet chamber sealing element 15 is a deformable membrane. By providing said deformable membrane, an increased stroke of the plunger element 11 is allowed, between the closing position and an opening position.

. Said outlet chamber sealing element 16 is a deformable membrane. By providing said deformable membrane, an increased stroke of the plunger element 11 is allowed, between the closing position and an opening position.

. According to a preferred embodiment, the stroke of said plunger element 11 is greater than 1 millimeter, and preferably the stroke of said plunger element 11 is greater than 2 millimeters. The word "stroke" means the distance that the plunger element 11 travels between said at least one closing position and said at least one opening position. Preferably, the stroke of this plunger element 11 is measured along said median axis X-X, or an extension thereof.

**.** According to a preferred embodiment, said sealing surface 13, said inlet chamber sealing element 15 and said outlet chamber sealing element 16 are coaxial. In other words, a median axis X-X is defined coinciding with the longitudinal development axis of said plunger element 11 and passing through a central portion of said inlet chamber sealing element 15 and said outlet chamber sealing element 16, and wherein said sealing surface 13 of the plunger element 11 extends about the median axis X-X. In this manner, the force needed to move the plunger element 11 associated with said inlet chamber sealing element 15 and said outlet chamber sealing element 16 is minimized.

**.** According to a preferred embodiment, said plunger element 11 comprises grooves for fixing said inlet chamber sealing element 15 and said outlet chamber sealing element 16.

. According to an embodiment, said counter-sealing surface 33 of the valve body 2 is provided with a choking 32 of the plunger housing 48. In other words, said valve body 2 comprises choking walls 31 which delimit a choking 32 of the plunger housing 48, wherein said choking walls 31 comprise said counter-sealing surface 33. In other words, said plunger housing 48 comprises a choking 32, wherein the choking walls 31 of said plunger housing 48 which delimit said choking 32 comprise the said counter-sealing surface 33.

. According to an embodiment, said valve body 2 is made in separate parts, which are assembled by means of valve body assembly means. In this manner, undercut bores can be easily made to shape said first plunger housing portion 30 as well as said choking 32, said second plunger housing portion 17 as well as said absorption portion 29 of the plunger housing 48, said first inlet chamber portion 49, said first outlet chamber portion 50 as well as said moving assembly housing 46. Preferably, said valve body 2 is made of separate parts which are assembled in direction either parallel to or coincident with the median axis X-X of the plunger element 11.

. According to an embodiment, said plunger element 11 comprises a portion of the increased overall dimension comprising said sealing surface 13. Providing said portion of increased dimension defines a sealing crown adapted to abut against said counter-sealing surface 33 of said valve body 2 which separates said inlet chamber 8 from said outlet chamber 10. Preferably, said counter-sealing surface 33 coincides with an edge of said valve body 2. According to an embodiment, said portion having increased dimension of the plunger element 11 is in the form of a bulge. According to an embodiment, said portion having increased dimension of the plunger element 11 comprises said truncated-cone-shaped portion 34 comprising said sealing surface 13.

. According to an embodiment, said plunger element 11 comprises a plunger stem 28, wherein said plunger stem 28 comprises an outer plunger surface 18, adapted stay in contact with the process fluid associable with electrovalve 1. According to a preferred embodiment, the dimension of said return spring 23 in direction orthogonal to the median axis X-X is either smaller than or substantially equal to the dimension of said plunger stem 28. In this manner, the dimensions of said electrovalve 1 can be kept small, while providing a fast response time.

. According to the invention, said plunger element 11 comprises an extension 26 which implements a coupling with said moving assembly 12, wherein said extension 26 of the plunger element 11 comprises at least one abutment surface 1 of opening 4, and wherein said moving assembly 12 comprises at least one magnet having a magnet body 7 comprising at least one opening counter-sealing surface 21, and wherein the abutment surface 14 of the plunger element 11 abuts against said opening abutment counter-surface 21 of the magnet body 7, when the plunger element 11 is in opening position. Providing said opening abutment surface 14 of the plunger element 11 and said opening abutment counter-surface 21 of the magnet body 7 makes it possible to prevent stresses arising from the movement of the movable plunger element 11 from being relieved on the sealing elements 15, 16 alone. In this manner, a long service life of the sealing elements 15, 16 is possible. The expression "opening abutment surface 14" and "opening abutment counter-surface 21" mean a surface which forms the abutment stop when the plunger element is in the opening position.

. Preferably, said magnet body 7 is made of ferromagnetic material which can be energized by said electromagnetic actuator 22, e.g. a solenoid, of the moving assembly 12.

. According to an embodiment, said extension 26 of the plunger element 11 is placed in said moving assembly housing 46, so as to prevent said extension 26 from being in contact with the process fluid associable with the electrovalve 1.

. According to an embodiment, said extension 26 of the plunger element 11 is made in one piece with said plunger element 11.

. According to an embodiment, said extension 26 of the plunger element 11 has a single prevalent longitudinal extension substantially in axis with said plunger element 11. According to an embodiment, the expression "in axis" means here that the median axis X-X of the plunger element 11, or of an extension thereof, substantially coincides with the median axis of the extension 26.

. According to an embodiment, said moving assembly 12 extends substantially in axis with said plunger element 11. According to an embodiment, the expression "in axis" means here that the median axis X-X of the plunger element 11, or of an extension thereof, substantially coincides with the median axis of the moving assembly 12, and that said moving assembly delimits a cavity. This allows said moving assembly 12 to achieve a balanced action on the plunger element 11. In this manner, less force can be applied the plunger element 11 being equal.

. According to an embodiment, the electromagnetic actuator 22, e.g. the solenoid, of said moving assembly 12 extends substantially in axis with said plunger element 11. According to an embodiment, the expression "in axis" means here that the median axis X-X of the plunger element 11, or of an extension thereof, substantially coincides with the median axis of the electromagnetic actuator 22, and said electromagnetic actuator 22 delimits a cavity. This allows said electromagnetic actuator 22, e.g. a solenoid, to achieve a balanced action on the plunger element 11. In this manner, less force can be applied the plunger element 11 being equal.

. Preferably, said sealing surface 13 is made on a truncated-cone-shaped portion 34 of the plunger element 11.

**.** According to an embodiment, said plunger element 11 is internally full, avoiding to delimit a cavity. In this manner, an increased resistance to the pressing action of said plunger element 11 is permitted.

. According to an embodiment, said sealing surface 13 of the plunger element 11 is made in one piece with the body of the plunger element 11. The number of assembled parts is reduced in this manner.

**.** According to an embodiment, said plunger element 11 is made in one piece.

. According to an embodiment, said plunger element 11 comprises an outer plunger surface 18, adapted to stay in contact with the process fluid associable with the electrovalve 1.

. According to an embodiment, said extension 26 of said plunger element 11 comprises at least one opening abutment surface 14, and wherein said moving assembly 12 comprises at least one opening abutment counter-surface 21, and wherein said abutment surface 14 of the plunger element 11 abuts against said opening abutment counter-surface 21 of the moving assembly 12, when the plunger element is in opening position, and wherein said plunger element 11 comprises at last one closing abutment surface 52, and wherein said valve body 2 comprises at least one closing abutment counter-surface 47, and wherein said closing abutment surface 52 of the plunger element 11 abuts against said closing abutment counter-surface 47 of the valve body 2, when the plunger element 11 is in closing position. The expression "closing abutment surface 52" and "closing abutment counter-surface 47" mean a surface which forms the abutment stop when the plunger element is in the closing position.

. Preferably, said moving assembly 12 comprises a magnet having a magnet body 7 comprising said an opening abutment counter-surface 21, wherein said valve body 2 and magnet body 7 are made of separate pieces.

. Providing said abutment surfaces 14, 52 of the plunger element 11 and of said abutment counter-surfaces 21, 47 makes it possible to avoid subjecting the inlet chamber sealing element 15 and the outlet chamber sealing element 16 to the stresses arising from the travel stop collisions of the plunger element 11 and valve body 2.

. According to an embodiment, said electrovalve 1 comprises a fluid-impermeable casing 19 which separates the moving assembly 12 from the environment in which the electrovalve 1 is placed. In this manner, the moving unit 12 is fluidically isolated from the environment in which the electrovalve valve 1 is placed, such as the marine environment. Preferably, said casing 19 cooperates with said outlet chamber sealing element 16 to delimit said moving assembly housing 46.

. According to an embodiment, oil is interposed between said casing 19 and said moving assembly 12 of the plunger assembly 11. According to an embodiment, oil having pressure which is compensated by the pressure of the environment in which the electrovalve valve 1 is placed, such as the marine environment, is interposed between said casing 19 and said moving assembly 12 of the plunger element 11. This makes the electrovalve valve 1 adapted to operate safely in the underwater environment, at greater depths than known solutions. According to an embodiment, said electrovalve valve 1 comprises a union 43 for feeding the oil in fluid communication with said moving assembly 12.

. According to an embodiment, said plunger element 11 comprises a thrust surface 25 abutting against said return spring 23 and adapted to exchange the thrust action with said return spring 23.

. According to an embodiment, said extension 26 of said plunger element 11 delimits a spring housing to accommodate said return spring 23 abutting against said thrust surface 25.

. According to an embodiment, said spring housing develops about the median axis X-X. According to an embodiment, said return spring 23 has a longitudinal axis of development which substantially coincides with the median axis X-X or an extension thereof.

. According to an embodiment, said plunger element 11 is made in separate pieces which are then assembled and comprises a plunger body which delimits a cavity in which an inner stem 27 is inserted, wherein said inner stem 27 comprises said thrust surface 25. Providing said inner stem 27 makes it easier to assemble the electrovalve valve 1.

. According to a preferred embodiment, said electrovalve 1 is a driving electrovalve.

. According to an embodiment, said electrovalve 1 is a modular electrovalve, adapted to be operatively connected to at least one further electrovalve. In this manner, a plurality of electrovalves 1 can be assembled.

. According to an embodiment, said electrovalve 1 comprises a base 36 comprising at least one connection housing 37 and said valve body 2 comprises at least one connection element 35, adapted to engage in said connection housing 37 to connect said valve body 2 to said base 36.

**.** According to an embodiment, said base 36 comprises modular connection means for operatively connecting to at least one further base 36 for making an operative connection between two or more electrovalves 1.

**.** According to an embodiment, said base 36 of the electrovalve 1 comprises at least one inlet port 38, adapted to form a fluid connection with said inlet opening 4 of the valve body 2, and an outlet port 39, adapted to form a fluid connection with said outlet opening 6 of the valve body 2. According to an embodiment, said base 36 of the electrovalve 1 has a substantially cup-shaped shape which delimits a base cavity and comprises a bottom base 45, associated with said valve body 2 with base fixing means 44.

**.** According to an embodiment, an assembly 20 comprises a plurality of electrovalves 1, according to any of the embodiments described above.

**.** According to an embodiment, said assembly 20 comprises an assembly base 40 comprising a plurality of connection housings 37. According to an embodiment, said assembly base 40 comprises a plurality of assembly ports 41, said plurality of assembly ports 41 comprising at least one inlet port 38, in fluid communication with the inlet opening 4 of at least one electrovalve 1 of said assembly 20, and at least one outlet port 39, in fluid communication with the outlet opening 4 of at least one electrovalve 1 of said assembly 20.

**.** According to an embodiment, said assembly 20 comprises an assembly casing 42 to fluidically isolate said plurality of electrovalves 1 of the environment in which the electrovalve 1 is placed, such as marine environment, for example.

**.** According to a general embodiment, a system is provided comprising at least one driving electrovalve 1, according to any one of the embodiments described above, operationally associated with a controlled valve.

**.** A person skilled in art may make many changes, adaptations and replacements to the embodiments described above or may replace elements with others which are functionally equivalent in order to satisfy contingent needs without however departing from the scope of protection of the appended claims.

### LIST OF REFERENCES

- 1: electrovalve
- 2: valve body
- 3: inlet edge
- 4: inlet opening
- 5: outlet edge
- 6: outlet opening
- 7: magnet body
- 8: inlet chamber
- 9: gap
- 10: outlet chamber
- 11: plunger element
- 12: moving assembly
- 13: sealing surface of the plunger element
- 14: opening abutment surface of the plunger element
- 15: sealing element of the inlet chamber
- 16: sealing element of the outlet chamber
- 17: second plunger housing chamber portion
- 18: plunger outer surface
- 19: electrovalve casing
- 20: assembly
- 21: opening abutment surface of the magnet body
- 22: magnetic actuator or solenoid
- 23: return spring
- 24: opening direction
- 25: thrust surface
- 26: plunger element extension
- 27: inner stem
- 28: plunger element stem
- 29: plunger housing absorption portion
- 30: first plunger housing chamber portion
- 31: valve body choking walls
- 32: plunger housing choking
- 33: counter-sealing surface
- 34: truncated-cone-shaped portion
- 35: connection element
- 36: electrovalve base
- 37: connection housing
- 38: inlet port
- 39: outlet port
- 40: assembly base
- 41: assembly port
- 42: assembly casing
- 43: union
- 44: base fixing means
- 45: base bottom
- 46: moving assembly housing
- 47: closing abutment counter-surface
- 48: plunger housing
- 49: inlet chamber first portion
- 50: outlet chamber first portion
- 51: plunger housing absorption portion
- 52: closing abutment counter-surface
- S1;: thrust area, or first thrust area
- S2;: thrust area, or second thrust area
- S3;: thrust area, or third thrust area
- X-X.: median axis of the plunger element
- R-R.: radial direction

## Claims

1. Electrovalve (1) comprising a valve body (2), said valve body (2) delimiting at least one inlet opening (4), and at least one outlet opening (6);
wherein said valve body (2) comprises inlet chamber walls which at least partially delimit at least one inlet chamber (8) in fluid communication with said at least one inlet opening (4), and outlet chamber walls, which at least partially delimit at least one outlet chamber (10), in fluid communication with said at least one outlet opening (6);
and wherein said electrovalve (1) further comprises a plunger element (11) movable between at least one closing position and at least one opening position;
and wherein, when the plunger element (11) is in said at least one closing position, said inlet chamber (8) comprises a first plunger housing chamber portion (30) and said outlet chamber (10) comprises a second plunger housing chamber portion (17), said first plunger housing chamber portion (30) and said second plunger housing chamber portion (17) defining a plunger housing (48);
and wherein said plunger element (11) is accommodated in said plunger housing (48) and movable with respect to said valve body (2) between said at least one opening position, in which it puts said inlet chamber (8) into fluid communication with said outlet chamber (10), and said at least one closing position, in which by cooperating with said plunger housing (48), it fluidically isolates said outlet chamber (10) from said inlet chamber (8);
and wherein said electrovalve (1) comprises a moving assembly (12) adapted to move said plunger element (11) between said at least one opening position and said at least one closing position;
and wherein said plunger element (11) comprises at least one sealing surface (13) which forms an abutment reference adapted to cooperate with a counter-sealing surface (33) provided in the walls of said plunger housing (48) and which delimits at least one portion of the plunger housing (48) forming a seal for a process fluid associable with the electrovalve (1), when said plunger element (11) is in said at least one closing position;
and wherein said electrovalve (1) comprises:
- an inlet chamber sealing element (15) associated with said plunger element (11) and associated with said inlet chamber walls, wherein said inlet chamber sealing element (15) by permitting the movement of said plunger element (11), forms at least one wall of said inlet chamber (8),
- an outlet chamber sealing element (16) associated with said plunger element (11) and associated with said outlet chamber walls, wherein said outlet chamber sealing element (16) by permitting the movement of said plunger element (11), forms at least one wall of said outlet chamber (10);
and wherein said inlet chamber sealing element (15), defines a thrust area (S1), or first thrust area (S1), on which the process fluid associable with the electrovalve (1) acts;
and wherein said sealing surface (13) of the plunger element (11) by cooperating with the counter-sealing surface (33) of the plunger housing defines a thrust area (S2), or second thrust area (S2), on which the process fluid acts;
and wherein said outlet chamber sealing element (16), defines a thrust area (S3), or third thrust area (S3), on which the process fluid associable with the electrovalve (1) acts;
said thrust areas (S1, S2, S3) are substantially mutually equal, so that said plunger element (11) is in hydrostatic balance both when it is in said at least one opening position and when it is in said at least one closing position,
wherein, when the plunger element (11) is in the closing position, the process fluid presses on the first thrust area (S1), which is located on said inlet chamber sealing element (15) and on the second thrust area (S2), which is located on the sealing face (13) of the plunger element (11),
and wherein, when the plunger element (11) is in the opening position, said first plunger housing chamber portion (30) and said second plunger housing chamber portion (17) are in mutual fluid communication, forming said plunger housing (48), and
the process fluid presses on the first thrust area (S1), which is located on said inlet chamber sealing element (15) and on the third thrust area (S3) which is located on said outlet chamber sealing element (16),
wherein said inlet chamber sealing element (15) is a deformable membrane; and wherein said outlet chamber sealing element (16) is a deformable membrane;
**characterized in that** said plunger element (11) comprises an extension (26) of the plunger element (11) which implements a coupling with said moving assembly (12), wherein said extension (26) of the plunger element (11) comprises at least one abutment surface (14), and wherein said moving assembly (12) comprises at least one magnet having a magnet body (7) comprising at least one counter-sealing surface (21), and wherein the abutment surface (14) of the plunger element (11) abuts against said counter-sealing surface (21) of the magnet body (7), when the plunger element (11) is in opening position.

2. Electrovalve (1) according to claim **1,** wherein at least one of said outlet chamber sealing element (16) and said inlet chamber sealing element (15) at least partially delimits a moving assembly housing (46) and fluidically isolates said moving assembly (12) from said plunger housing (48) .

3. Electrovalve (1) according to any one of the preceding claims, wherein said plunger housing (48) has a radial symmetry shape which develops about a median axis (X-X), defining a radial direction (R-R) orthogonal to the median axis (X-X), wherein a first inlet chamber portion (49) of the inlet chamber (8) leads radially into said plunger housing (48) in an engaging position (51).

4. Electrovalve (1) according to any one of the preceding claims, wherein said valve body (2) comprises choking walls (31) which delimit a choking (32) of the plunger housing (48), wherein said choking walls (31) comprise said counter-sealing surface (33).

5. Electrovalve (1) according to any one of the preceding claims, wherein said sealing surface (13) is made on a truncated-cone-shaped portion (34) of the plunger element (11).

6. Electrovalve (1) according to any one of the preceding claims, wherein said sealing surface (13), said inlet chamber sealing element (15) and said outlet chamber sealing element (16) are coaxial; and/or wherein said moving assembly (12) of the plunger element (11) comprises an electromagnetic actuator (22), e.g. a solenoid, wherein the solenoid of said moving assembly (12) extends substantially in axis with said plunger element (11); and/or wherein
said electrovalve (1) is adapted for application in submarine environment.

7. Electrovalve (1) according to claim 1, wherein said extension (26) of the plunger element (11) is placed in said moving assembly housing (46), so as to prevent said extension (26) from being in contact with the process fluid associable with the electrovalve (1).

8. Electrovalve (1) according to claim 1, wherein said extension (26) of the plunger element (11) is made in one piece with said plunger element (11); and/or wherein
said extension (26) of the plunger element (11) has a single prevalent longitudinal extension substantially in axis with said plunger element (11).

9. Electrovalve (1) according to any one of the preceding claims, wherein said plunger element (11) comprises an internally full plunger body, avoiding to delimit a cavity; and wherein
said sealing surface (13) of the plunger element (11) is made in one piece with the plunger body; and/or wherein
said plunger element (11) comprises an outer plunger surface (18), adapted to stay in contact with the process fluid associable with the electrovalve (1); and wherein
said plunger element (11) is made in one piece; and/or wherein
said valve body (2) is made in separate parts which are assembled by means of valve body assembly means.

10. Electrovalve (1) according to any one of the preceding claims, wherein said second plunger housing portion (17) of the plunger housing (48) comprises an absorption portion (29), of larger section than said first plunger housing portion (30), to absorb possible water hammers and shock waves deriving from the movement of the plunger element (11) of the electrovalve (1) between said at least one opening position and said at least one closing position.

11. Electrovalve (1) according to any one of the preceding claims, comprising a fluid-impermeable casing (19) which separates the moving assembly (12) from the environment in which the electrovalve (1) is placed; and wherein oil is interposed between said casing (19) and said moving assembly (12) of the plunger assembly (11).

12. Electrovalve (1) according to claim 7, wherein
said moving assembly (12) comprises a magnetic actuator (22) and a return spring (23), wherein
said plunger element (11) comprises a thrust surface (25) abutting against said return spring (23) and adapted to exchange the thrust action with said return spring (23); and wherein
said extension (26) of said plunger element (11) delimits a spring housing to accommodate said return spring (23) abutting against said thrust surface (25); and wherein
said plunger element (11) is made in separate pieces which are then assembled and comprises a plunger body which delimits a cavity in which an inner stem (27) is inserted comprising said thrust surface (25).

13. Electrovalve (1) according to any one of the preceding claims, wherein
said electrovalve (1) is a driving electrovalve ; and/or wherein
said electrovalve (1) is a modular electrovalve, adapted to connect operatively to at least one further electrovalve; and/or wherein
said electrovalve (1) comprises a base (36) comprising at least one connection housing (37) and said valve body (2) comprises at least one connection element (35), adapted to engage in said connection housing (37) to connect said valve body (2) to said base (36).

14. A modular assembly (20) comprising a plurality of electrovalves (1), according to any one of the preceding claims.

15. Modular assembly (20) according to the previous claim, wherein said assembly (20) comprises an assembly base (40) comprising a plurality of connection housings (37); and/or wherein
said assembly base (40) comprises a plurality of assembly ports (41), said plurality of assembly ports (41) comprising at least one inlet port (38), in fluid communication with the inlet opening (4) of at least one electrovalve (1) of said assembly (20), and at least one outlet port (39), in fluid communication with the outlet opening (6) of at least one electrovalve (1) of said assembly (20).

## Patentansprüche

1. Elektroventil (1), umfassend einen Ventilkörper (2), wobei der Ventilkörper (2) wenigstens eine Einlassöffnung (4) und wenigstens eine Auslassöffnung (6) begrenzt,
wobei der Ventilkörper (2) Einlasskammerwände, welche wenigstens eine Einlasskammer (8), welche mit der wenigstens einen Einlassöffnung (4) in Fluidverbindung ist, wenigstens teilweise begrenzen, und Auslasskammerwände umfasst, welche wenigstens eine Auslasskammer (10), welche mit der wenigstens einen Auslassöffnung (6) in Fluidverbindung ist, wenigstens teilweise begrenzen,
und wobei das Elektroventil (1) ferner ein Kolbenelement (11) umfasst, welches zwischen wenigstens einer Schließposition und wenigstens einer Öffnungsposition bewegbar ist;
und wobei, wenn sich das Kolbenelement (11) in der wenigstens einen Schließposition befindet, die Einlasskammer (8) einen ersten Kolbengehäuse-Kammerabschnitt (30) umfasst und die Auslasskammer (10) einen zweiten Kolbengehäuse-Kammerabschnitt (17) umfasst, wobei der erste Kolbengehäuse-Kammerabschnitt (30) und der zweite Kolbengehäuse-Kammerabschnitt (17) ein Kolbengehäuse (48) definieren;
und wobei das Kolbenelement (11) in dem Kolbengehäuse (48) aufgenommen und in Bezug auf den Ventilkörper (2) zwischen der wenigstens einen Öffnungsposition, in welcher es die Einlasskammer (8) in Fluidverbindung mit der Auslasskammer (10) versetzt, und der wenigstens einen Schließposition bewegbar ist, in welcher es die Auslasskammer (10) durch Zusammenwirken mit dem Kolbengehäuse (48) von der Einlasskammer (8) fluidisch isoliert;
und wobei das Elektroventil (1) eine Bewegungsanordnung (12) umfasst, welche dazu eingerichtet ist, das Kolbenelement (11) zwischen der wenigstens einen Öffnungsposition und der wenigstens einen Schließposition zu bewegen;
und wobei das Kolbenelement (11) wenigstens eine Dichtungsfläche (13) umfasst, welche einen Anschlagsbezugspunkt bildet, welcher dazu eingerichtet ist, mit einer Gegendichtungsfläche (33) zusammenzuwirken, welche in den Wänden des Kolbengehäuses (48) bereitgestellt ist und welche wenigstens einen Abschnitt des Kolbengehäuses (48) begrenzt, um eine Dichtung für ein mit dem Elektroventil (1) assoziierbares Prozessfluid zu bilden, wenn sich das Kolbenelement (11) in der wenigstens einen Schließposition befindet,
und wobei das Elektroventil (1) umfasst:
- ein Einlasskammer-Dichtungselement (15), welches mit dem Kolbenelement (11) assoziiert und mit den Einlasskammerwänden assoziiert ist, wobei das Einlasskammer-Dichtungselement (15) durch Zulassen der Bewegung des Kolbenelements (11) wenigstens eine Wand der Einlasskammer (8) bildet,
- ein Auslasskammer-Dichtungselement (16), welches mit dem Kolbenelement (11) assoziiert und mit den Auslasskammerwänden assoziiert ist, wobei das Auslasskammer-Dichtungselement (16) durch Zulassen der Bewegung des Kolbenelements (11) wenigstens eine Wand der Auslasskammer (10) bildet,
und wobei das Einlasskammer-Dichtungselement (15) einen Schubbereich (S1) oder einen ersten Schubbereich (S1) definiert, auf welchen das mit dem Elektroventil (1) assoziierbare Prozessfluid wirkt;
und wobei die Dichtungsfläche (13) des Kolbenelements (11) durch Zusammenwirken mit der Gegendichtungsfläche (33) des Kolbengehäuses einen Schubbereich (S2) oder einen zweiten Schubbereich (S2) definiert, auf welchen das Prozessfluid wirkt;
und wobei das Auslasskammer-Dichtungselement (16) einen Schubbereich (S3) oder einen dritten Schubbereich (S3) definiert, auf welchen das mit dem Elektroventil (1) assoziierbare Prozessfluid wirkt;
wobei die Schubbereiche (S1, S2, S3) im Wesentlichen zueinander gleich sind, sodass das Kolbenelement (11), sowohl wenn es sich in der wenigstens einen Öffnungsposition befindet als auch wenn es sich in der wenigstens einen Schließposition befindet, in einem hydrostatischen Gleichgewicht ist,
wobei, wenn sich das Kolbenelement (11) in der Schließposition befindet, das Prozessfluid auf den ersten Schubbereich (S1), welcher an dem Einlasskammer-Dichtungselement (15) angeordnet ist, und auf den zweiten Schubbereich (S2) drückt, welcher an der Dichtungsfläche (13) des Kolbenelements (11) angeordnet ist,
und wobei, wenn sich das Kolbenelement (11) in der Öffnungsposition befindet, der erste Kolbengehäuse-Kammerabschnitt (30) und der zweite Kolbengehäuse-Kammerabschnitt (17) in gegenseitiger Fluidverbindung sind, um das Kolbengehäuse (48) zu bilden, und
das Prozessfluid auf den ersten Schubbereich (S1), welcher an dem Einlasskammer-Dichtungselement (15) angeordnet ist, und auf den dritten Schubbereich (S3) drückt, welcher an dem Auslasskammer-Dichtungselement (16) angeordnet ist,
wobei das Einlasskammer-Dichtungselement (15) eine deformierbare Membran ist;
und wobei das Auslasskammer-Dichtungselement (16) eine deformierbare Membran ist;
**dadurch gekennzeichnet, dass** das Kolbenelement (11) eine Erweiterung (26) des Kolbenelements (11) umfasst, welche eine Kopplung mit der Bewegungsanordnung (12) implementiert, wobei die Erweiterung (26) des Kolbenelements (11) wenigstens eine Anschlagsfläche (14) umfasst, und wobei die Bewegungsanordnung (12) wenigstens einen Magneten umfasst, welcher einen Magnetkörper (7) aufweist, welcher wenigstens eine Gegendichtungsfläche (21) umfasst, und wobei die Anschlagsfläche (14) des Kolbenelements (11) an der Gegendichtungsfläche (21) des Magnetkörpers (7) anstößt, wenn sich das Kolbenelement (11) in der Öffnungsposition befindet.

2. Elektroventil (1) nach Anspruch 1, wobei wenigstens eines aus dem Auslasskammer-Dichtungselement (16) und dem Einlasskammer-Dichtungselement (15) ein Bewegungsanordnung-Gehäuse (46) wenigstens teilweise begrenzt und die Bewegungsanordnung (12) von dem Kolbengehäuse (48) fluidisch isoliert.

3. Elektroventil (1) nach einem der vorhergehenden Ansprüche, wobei das Kolbengehäuse (48) eine radial symmetrische Form aufweist, welche sich um eine mittlere Achse (X-X) entwickelt, welche eine zu der mittleren Achse (X-X) orthogonale radiale Richtung (R-R) definiert, wobei ein erster Einlasskammerabschnitt (49) der Einlasskammer (8) in einer Eingriffsposition (51) radial in das Kolbengehäuse (48) führt.

4. Elektroventil (1) nach einem der vorhergehenden Ansprüche, wobei der Ventilkörper (2) Stauungswände (31) umfasst, welche eine Stauung (32) des Kolbengehäuses (48) begrenzen, wobei die Stauungswände (31) die Gegendichtungsfläche (33) umfassen.

5. Elektroventil (1) nach einem der vorhergehenden Ansprüche, wobei die Dichtungsfläche (13) an einem kegelstumpfförmigen Abschnitt (34) des Kolbenelements (11) ausgeführt ist.

6. Elektroventil (1) nach einem der vorhergehenden Ansprüche, wobei die Dichtungsfläche (13), das Einlasskammer-Dichtungselement (15) und das Auslasskammer-Dichtungselement (16) koaxial sind, und/oder wobei
die Bewegungsanordnung (12) des Kolbenelements (11) einen elektromagnetischen Aktuator (22) umfasst, beispielsweise eine Spule, wobei sich die Spule der Bewegungsanordnung (12) im Wesentlichen in der Achse mit dem Kolbenelement (11) erstreckt; und/oder wobei
das Elektroventil (1) zur Anwendung in submariner Umgebung eingerichtet ist.

7. Elektroventil (1) nach Anspruch 1, wobei die Erweiterung (26) des Kolbenelements (11) in dem Bewegungsanordnung-Gehäuse (46) platziert ist, um zu verhindern, dass die Erweiterung (26) in Kontakt mit dem mit dem Elektroventil (1) assoziierbaren Prozessfluid tritt.

8. Elektroventil (1) nach Anspruch 1, wobei die Erweiterung (26) des Kolbenelements (11) aus einem Stück mit dem Kolbenelement (11) ausgeführt ist; und/oder wobei
die Erweiterung (26) des Kolbenelements (1) eine einzelne vorherrschend longitudinale Erstreckung aufweist, welche im Wesentlichen in der Achse mit dem Kolbenelement (11) ist.

9. Elektroventil (1) nach einem der vorhergehenden Ansprüche, wobei das Kolbenelement (11) einen im Inneren gefüllten Kolbenkörper umfasst, um eine Begrenzung eines Hohlraums zu vermeiden; und wobei
die Dichtungsfläche (13) des Kolbenelements (11) aus einem Stück mit dem Kolbenkörper ausgeführt ist; und/oder wobei
das Kolbenelement (11) eine äußere Kolbenfläche (18) umfasst, welche dazu eingerichtet ist, in Kontakt mit dem mit dem Elektroventil (1) assoziierbaren Prozessfluid zu bleiben; und wobei
das Kolbenelement (11) aus einem Stück ausgeführt ist; und/oder wobei
der Ventilkörper (2) aus separaten Teilen ausgeführt ist, welche mittels Ventilkörper-Aufbaumitteln aufgebaut sind.

10. Elektroventil (1) nach einem der vorhergehenden Ansprüche, wobei der zweite Kolbengehäuse-Abschnitt (17) des Kolbengehäuses (48) einen Absorptionsabschnitt (29) mit größerem Querschnitt als der erste Kolbengehäuse-Abschnitt (30) umfasst, um mögliche Wasserschläge und Schockwellen zu absorbieren, welche von der Bewegung des Kolbenelements (11) des Elektroventils (1) zwischen der wenigstens einen Öffnungsposition und der wenigstens einen Schließposition stammen.

11. Elektroventil (1) nach einem der vorhergehenden Ansprüche, umfassend eine fluidundurchlässige Ummantelung (19), welche die Bewegungsanordnung (12) von der Umgebung separiert, in welcher das Elektroventil (1) platziert ist; und wobei
Öl zwischen der Ummantelung (19) und der Bewegungsanordnung (12) der Kolbenanordnung (11) eingefügt ist.

12. Elektroventil (1) nach Anspruch 7, wobei die Bewegungsanordnung (12) einen magnetischen Aktuator (22) und eine Rückstellfeder (23) umfasst, wobei
das Kolbenelement (11) eine Schubfläche (25) umfasst, welche an die Rückstellfeder (23) anstößt und dazu eingerichtet ist, die Schubwirkung mit der Rückstellfeder (23) auszutauschen; und wobei
die Erweiterung (26) des Kolbenelements (11) ein Federgehäuse begrenzt, um die Rückstellfeder (23) aufzunehmen, welche an die Schubfläche (25) anstößt, und wobei
das Kolbenelement (11) aus separaten Stücken ausgeführt ist, welche dann aufgebaut werden, und einen Kolbenkörper umfasst, welcher einen Hohlraum begrenzt, in welchem ein innerer Schaft (27) eingefügt ist, welcher die Schubfläche (25) umfasst.

13. Elektroventil (1) nach einem der vorhergehenden Ansprüche, wobei das Elektroventil (1) ein Antriebs-Elektroventil ist; und/oder wobei
das Elektroventil (1) ein Modular-Elektroventil ist, welches dazu eingerichtet ist, funktionsfähig mit wenigstens einem weiteren Elektroventil verbunden zu sein; und/oder wobei
das Elektroventil (1) eine Basis (36) umfasst, welche wenigstens ein Verbindungsgehäuse (37) umfasst, und der Ventilkörper (2) wenigstens ein Verbindungselement (3b) umfasst, welches dazu eingerichtet ist, in das Verbindungsgehäuse (37) einzugreifen, um den Ventilkörper (2) mit der Basis (36) zu verbinden.

14. Modularanordnung (20), umfassend eine Mehrzahl von Elektroventilen (1) nach einem der vorhergehenden Ansprüche.

15. Modularanordnung (20) nach dem vorhergehenden Anspruch, wobei die Anordnung (20) eine Anordnungsbasis (40) umfasst, welche eine Mehrzahl von Verbindungsgehäusen (37) umfasst, und/oder wobei
die Anordnungsbasis (40) eine Mehrzahl von Anordnungsanschlüssen (41) umfasst, wobei die Mehrzahl von Anordnungsanschlüssen (41) wenigstens einen Einlassanschluss (38), welcher in Fluidverbindung mit der Einlassöffnung (4) wenigstens eines Elektroventils (1) der Anordnung (20) ist, und wenigstens einen Auslassanschluss (39) umfasst, welcher in Fluidverbindung mit der Auslassöffnung (6) wenigstens eines Elektroventils (1) der Anordnung (20) ist.

## Revendications

1. Électrovanne (1) comprenant un corps de vanne (2), ledit corps de vanne (2) délimitant au moins une ouverture d'entrée (4), et au moins une ouverture de sortie (6) ;
ledit corps de vanne (2) comprenant des parois de chambre d'entrée qui délimitent au moins partiellement au moins une chambre d'entrée (8) en communication fluidique avec ladite au moins une ouverture d'entrée (4), et des parois de chambre de sortie, qui délimitent au moins partiellement au moins une chambre de sortie (10), en communication fluidique avec ladite au moins une ouverture de sortie (6) ;
et ladite électrovanne (1) comprenant en outre un élément piston-plongeur (11) mobile entre au moins une position de fermeture et au moins une position d'ouverture ;
et, lorsque l'élément piston-plongeur (11) est dans ladite au moins une position de fermeture, ladite chambre d'entrée (8) comprenant une première partie de chambre de logement de piston-plongeur (30) et ladite chambre de sortie (10) comprenant une deuxième partie de chambre de logement de piston-plongeur (17), ladite première partie de chambre de logement de piston-plongeur (30) et ladite deuxième partie de chambre de logement de piston-plongeur (17) définissant un logement de piston-plongeur (48) ;
et ledit élément piston-plongeur (11) étant reçu dans ledit logement de piston-plongeur (48) et mobile par rapport audit corps de vanne (2) entre ladite au moins une position d'ouverture dans laquelle il met ladite chambre d'entrée (8) en communication fluidique avec ladite chambre de sortie (10), et ladite au moins une position de fermeture, dans laquelle, en coopérant avec ledit logement de piston-plongeur (48), il isole fluidiquement ladite chambre de sortie (10) de ladite chambre d'entrée (8) ;
et ladite électrovanne (1) comprenant un ensemble mobile (12) adapté pour déplacer ledit élément piston-plongeur (11) entre ladite au moins une position d'ouverture et ladite au moins une position de fermeture ;
et ledit élément piston-plongeur (11) comprenant au moins une surface d'étanchéité (13) qui forme une référence de butée adaptée pour coopérer avec une contre-surface d'étanchéité (33) située dans les parois dudit logement de piston-plongeur (48) et qui délimite au moins une partie du logement de piston-plongeur (48) formant un joint pour un fluide de traitement pouvant être associé à l'électrovanne (1), lorsque ledit élément piston-plongeur (11) est dans ladite au moins une position de fermeture ;
et ladite électrovanne (1) comprenant :
- un élément d'étanchéité de chambre d'entrée (15) associé audit élément piston-plongeur (11) et associé auxdites parois de chambre d'entrée, ledit élément d'étanchéité de chambre d'entrée (15) formant, en permettant le déplacement dudit élément piston-plongeur (11), au moins une paroi de ladite chambre d'entrée (8),
- un élément d'étanchéité de chambre de sortie (16) associé audit élément piston-plongeur (11) et associé auxdites parois de chambre de sortie, ledit élément d'étanchéité de chambre de sortie (16) formant, en permettant le déplacement dudit élément piston-plongeur (11), au moins une paroi de ladite chambre de sortie (10) ;
et ledit élément d'étanchéité de chambre d'entrée (15) définissant une zone de poussée (S1), ou première zone de poussée (S1), sur laquelle agit le fluide de traitement pouvant être associé à l'électrovanne (1) ;
et ladite surface d'étanchéité (13) de l'élément piston-plongeur (11) définissant, en coopérant avec la contre-surface d'étanchéité (33) du logement de piston-plongeur, une zone de poussée (S2), ou deuxième zone de poussée (S2), sur laquelle agit le fluide de traitement ;
et ledit élément d'étanchéité de chambre de sortie (16) définissant une zone de poussée (S3), ou troisième zone de poussée (S3), sur laquelle agit le fluide de traitement pouvant être associé à l'électrovanne (1) ;
lesdites zones de poussée (S1, S2, S3) étant sensiblement égales les unes aux autres, de telle sorte que ledit élément piston-plongeur (11) soit en équilibre hydrostatique aussi bien lorsqu'il est dans ladite au moins une position d'ouverture que lorsqu'il est dans ladite au moins une position de fermeture,
lorsque l'élément piston-plongeur (11) est dans la position de fermeture, le fluide de traitement appuyant sur la première zone de poussée (S1) qui est située sur ledit élément d'étanchéité de chambre d'entrée (15) et sur la deuxième zone de poussée (S2) qui est située sur la face d'étanchéité (13) de l'élément piston-plongeur (11),
et lorsque l'élément piston-plongeur (11) est dans la position d'ouverture, ladite première partie de chambre de logement de piston-plongeur (30) et ladite deuxième partie de chambre de logement de piston-plongeur (17) étant en communication fluidique mutuelle, formant ledit logement de piston-plongeur (48), et
le fluide de traitement appuyant sur la première zone de poussée (S1) qui est située sur ledit élément d'étanchéité de chambre d'entrée (15) et sur la troisième zone de poussée (S3) qui est située sur ledit élément d'étanchéité de chambre de sortie (16),
ledit élément d'étanchéité de chambre d'entrée (15) étant une membrane déformable ;
et ledit élément d'étanchéité de chambre de sortie (16) étant une membrane déformable ;
**caractérisée en ce que** ledit élément piston-plongeur (11) comprend une extension (26) de l'élément piston-plongeur (11) qui met en oeuvre un accouplement avec ledit ensemble mobile (12), ladite extension (26) de l'élément piston-plongeur (11) comprenant au moins une surface de butée (14), et ledit ensemble mobile (12) comprenant au moins un aimant ayant un corps d'aimant (7) avec au moins une contre-surface d'étanchéité (21), et la surface de butée (14) de l'élément piston-plongeur (11) butant contre ladite contre-surface d'étanchéité (21) du corps d'aimant (7) lorsque l'élément piston-plongeur (11) est dans la position d'ouverture.

2. Électrovanne (1) selon la revendication 1, au moins un parmi ledit élément d'étanchéité de chambre de sortie (16) et ledit élément d'étanchéité de chambre d'entrée (15) délimitant au moins partiellement un logement d'ensemble mobile (46) et séparant fluidiquement ledit ensemble mobile (12) dudit logement de piston-plongeur (48).

3. Électrovanne (1) selon l'une quelconque des revendications précédentes, ledit logement de piston-plongeur (48) ayant une forme de symétrie radiale qui se développe autour d'un axe médian (X-X), définissant une direction radiale (R-R) orthogonale à l'axe médian (X-X), une première partie de chambre d'entrée (49) de la chambre d'entrée (8) conduisant radialement dans ledit logement de piston-plongeur (48) dans une position de mise en prise (51).

4. Électrovanne (1) selon l'une quelconque des revendications précédentes, ledit corps de vanne (2) comprenant des parois d'étranglement (31) qui délimitent un étranglement (32) du logement de piston-plongeur (48), lesdites parois d'étranglement (31) comprenant ladite contre-surface d'étanchéité (33).

5. Électrovanne (1) selon l'une quelconque des revendications précédentes, ladite surface d'étanchéité (13) étant créée sur une partie de forme tronconique (34) de l'élément piston-plongeur (11).

6. Électrovanne (1) selon l'une quelconque des revendications précédentes, ladite surface d'étanchéité (13), ledit élément d'étanchéité de chambre d'entrée (15) et ledit élément d'étanchéité de chambre de sortie (16) étant coaxiaux ; et/ou ledit ensemble mobile (12) de l'élément piston-plongeur (11) comprenant un actionneur électromagnétique (22), par exemple un solénoïde, le solénoïde dudit ensemble mobile (12) s'étendant sensiblement dans l'axe avec ledit élément piston-plongeur (11) ; et/ou
ladite électrovanne (1) étant adaptée pour une application dans un environnement sous-marin.

7. Électrovanne (1) selon la revendication 1, ladite extension (26) de l'élément piston-plongeur (11) étant placée dans ledit logement d'ensemble mobile (46), de manière à empêcher ladite extension (26) d'être en contact avec le fluide de traitement pouvant être associé à l'électrovanne (1).

8. Électrovanne (1) selon la revendication 1, ladite extension (26) de l'élément piston-plongeur (11) étant composée d'un seul tenant avec ledit élément piston-plongeur (11) ; et/ou
ladite extension (26) de l'élément piston-plongeur (11) comprenant une extension longitudinale prédominante unique sensiblement dans l'axe avec ledit élément piston-plongeur (11).

9. Électrovanne (1) selon l'une quelconque des revendications précédentes, ledit élément piston-plongeur (11) comprenant un corps de piston-plongeur intérieurement complet, évitant de délimiter une cavité ; et
ladite surface d'étanchéité (13) de l'élément piston-plongeur (11) étant créée d'un seul tenant avec le corps de piston-plongeur ; et/ou
ledit élément piston-plongeur (11) comprenant une surface de piston-plongeur extérieure (18), adaptée pour rester en contact avec le fluide de traitement pouvant être associé à l'électrovanne (1) ; et
ledit élément piston-plongeur (11) étant créé d'un seul tenant ; et/ou
ledit corps de vanne (2) étant créé en parties séparées qui sont assemblées à l'aide d'un moyen d'assemblage de corps de vanne.

10. Électrovanne (1) selon l'une quelconque des revendications précédentes, ladite deuxième partie de logement de piston-plongeur (17) du logement de piston-plongeur (48) comprenant une partie d'absorption (29), de section plus grande que celle de ladite première partie de logement de piston-plongeur (30), pour absorber de possibles coups de bélier et ondes de choc provenant du déplacement de l'élément piston-plongeur (11) de l'électrovanne (1) entre ladite au moins une position d'ouverture et ladite au moins une position de fermeture.

11. Électrovanne (1) selon l'une quelconque des revendications précédentes, comprenant un boîtier (19) imperméable aux fluides qui sépare l'ensemble mobile (12) de l'environnement dans lequel est placée l'électrovanne (1) ; et de l'huile étant interposée entre ledit boîtier (19) et ledit ensemble mobile (12) de l'ensemble piston-plongeur (11).

12. Électrovanne (1) selon la revendication 7,
ledit ensemble mobile (12) comprenant un actionneur magnétique (22) et un ressort de rappel (23),
ledit élément piston-plongeur (11) comprenant une surface de poussée (25) venant buter contre ledit ressort de rappel (23) et adaptée pour échanger l'action de poussée avec ledit ressort de rappel (23) ; et
ladite extension (26) dudit élément piston-plongeur (11) délimitant un logement de ressort pour recevoir ledit ressort de rappel (23) venant buter contre ladite surface de poussée (25) ; et
ledit élément piston-plongeur (11) étant créé en pièces séparées qui sont ensuite assemblées, et comprenant un corps de piston-plongeur qui délimite une cavité dans laquelle est insérée une tige intérieure (27) comprenant ladite surface de poussée (25).

13. Électrovanne (1) selon l'une quelconque des revendications précédentes,
ladite électrovanne (1) étant une électrovanne d'entraînement ; et/ou
ladite électrovanne (1) étant une électrovanne modulaire, adaptée pour être fonctionnellement raccordée à au moins une électrovanne supplémentaire ; et/ou
ladite électrovanne (1) comprenant une base (36) comportant au moins un logement de raccordement (37) et ledit corps de vanne (2) comprenant au moins un élément de raccordement (35), adapté pour venir en prise dans ledit logement de raccordement (37) pour raccorder ledit corps de vanne (2) à ladite base (36).

14. Ensemble modulaire (20) comprenant une pluralité d'électrovannes (1) selon l'une quelconque des revendications précédentes.

15. Ensemble modulaire (20) selon la revendication précédente, ledit ensemble (20) comprenant une base d'ensemble (40) comportant une pluralité de logements de raccordement (37) ; et/ou
ladite base d'ensemble (40) comprenant une pluralité d'orifices de raccordement (41), ladite pluralité d'orifices de raccordement (41) comprenant au moins un orifice d'entrée (38), en communication fluidique avec l'ouverture d'entrée (4) d'au moins une électrovanne (1) dudit ensemble (20), et au moins un orifice de sortie (39), en communication fluidique avec l'ouverture de sortie (6) d'au moins une électrovanne (1) dudit ensemble (20).
